# EUROPÄISCHE PATENTANMELDUNG

(11) **EP 2 551 814 A1**
(43) Veröffentlichungstag der Anmeldung: **30.01.2013**
(21) Anmeldenummer: 11176006.2
(22) Anmeldetag: 29.07.2011
(51) Int. Cl.: G06Q 30/00, G06Q 20/00

(54) **Verfahren zur Durchführung einer Authentifizierung eines Verfügungsberechtigten an einem Transaktionsterminal**

(71) Anmelder: Pacifica Beteiligungsgesellschaft mbH, 25451 Quickborn (DE)
(72) Erfinder: Die Erfindernennung liegt noch nicht vor
(74) Vertreter: Raffay & Fleck

(57) **Zusammenfassung**

Bezüglich eines Verfahrens zur Durchführung einer Verfügung eines Verfügungsberechtigten an einem Transaktionsterminal, wobei von einer Bedienperson Zugangsdaten in das Transaktionsterminal eingegeben werden, soll eine Verbesserung angegeben werden, welche eine zusätzliche Absicherung gegen einen betrügerischen Zugriff bietet.

Hierzu wird vorgeschlagen, dass neben Positionsdaten des Transaktionsterminals zudem Positionsdaten einer über eine eindeutige Kennung verfügenden, dem Verfügungsberechtigten zugeordneten, hinsichtlich einer Position bzw. eines Positionsbereiches, in dem es sich befindet, ortbaren, insbesondere drahtlos ortbaren, insbesondere mobilen, Vorrichtung abgefragt werden und dass die von der Bedienperson angefragte Verfügung nur dann freigegeben wird, wenn zusätzlich zu einer erfolgreichen Verifikation der von der Bedienperson eingegebenen Zugangsdaten die abgefragten Positionsdaten des ortbaren Gerätes des Verfügungsberechtigten mit der Position des Transaktionsterminals in vorbestimmter Weise korrelieren.

## Beschreibung

Die vorliegende Erfindung betrifft ein Verfahren zur Durchführung einer Verfügung eines Verfügungsberechtigten an einem Transaktionsterminal gemäß dem Oberbegriff des Patentanspruchs 1 . Insbesondere hat die Erfindung dabei zum Gegenstand, eine zusätzliche Sicherung derartiger Verfügungen gegen Missbrauch zu schaffen.

Unter solchen Verfügungen können z. B. Finanztransaktionen, Zugang zu physischen oder virtuellen Räumen, Gebäuden oder Geländen, Zugang zu digitalen Informationen, Netzen und/oder Diensten, wie beispielsweise Dateien, etwa in Clouds, Dropboxen, (File-/Web-)Servern oder Konten, E-Mail-Konten, Webseiten, Zugänge zu Computern an sich, VPN-Zugänge, Online-Banking oder ähnliches verstanden werden. Es kommt lediglich darauf an, dass ein Zugriff oder eine Verfügung nur nach erfolgreicher Authentifizierung erfolgen soll.

Finanztransaktionen finden z. B. oft in selbstbedienten Prozessen an Transaktionsterminals statt. Dies betrifft neben den Abhebungen von Bargeld an den klassischen und bekannten Geldautomaten auch bargeldlose Zahlungsvorgänge wie Überweisungen, bei denen das Bankkonto des Verfügungsberechtigten unmittelbar mit einem zu zahlenden Betrag belastet wird. Solche Zahlungsvorgänge können heute an eigens dafür eingerichteten Automaten - aber auch über das Internet von einem Computer - vorgenommen werden, die dann das jeweilige Transaktionsterminal bilden.

Derartigen Verfügungen ist gemein, dass sich eine anfragende Bedienperson, die das Transaktionsterminal bedient und eine bestimmte Verfügung anfragt, hinsichtlich der Daten zu Sicherheitszwecken ausweist bzw. autorisiert. Dies geschieht typischerweise durch Eingabe von korrelierenden Zugangsdaten. Dazu werden üblicherweise entweder von der Bedienperson unmittelbar und von Hand die ihr bekannten Zugangsdaten (wie z.B. eine Kontonummer, eine Kreditkartennummer oder dergleichen) in das Terminal eingegeben (z.B. über eine Tastatur oder einen Touchscreen), oder die Eingabe erfolgt mittels eines von der Bedienperson mitgeführten, von dem Transaktionsterminal auslesbaren Datenträgers. Zudem erfordert eine solche Verfügung häufig die Eingabe einer weiteren üblicherweise nur dem Verfügungsberechtigten und der Authentifizierungseinrichtung bekannten Kennung. Bekannte und weit verbreitete auf Datenträger und Kennungen gestützte Systeme herkömmlicher Authentifizierung sind Kredit-, Bank- oder Scheckkarten, auf deren Magnetstreifen die zu den ihnen zugeordneten Bankkonten korrelierende Zugangsdaten enthalten sind und die über eine Autorisierungssicherung z. B. mit einem PIN-Code verfügen, der für die meisten dieser Karten aus einer vierstelligen Ziffernfolge besteht. Heute werden für viele - aber nicht alle - dieser Karten (z.B. im Falle der Maestro-/EC-Karten) die Daten auch auf einem in die Karte integrierten Chip gespeichert. Für Finanztransaktionen, die über einen als Transaktionsterminal genutzten Computer, insbesondere über das Internet, verwendet werden, ist zur Autorisierung z.B. beim Online-Banking die Eingabe der Zugangsdaten in Form eines Anmeldenamens (z.B. der Kontonummer), sowie eines Passwortes erforderlich. Für über das Internet abzuwickelnde Zahlungsvorgänge mit Kreditkarten genügt häufig sogar die Eingabe von allein auf der Karte verzeichneten Daten, wie Kreditkartennummer, Gültigkeitsdauer und Prüfziffer, um eine Finanztransaktion mit Belastung des die Kreditkarte deckenden Bankkontos vornehmen zu können.

Für die Beauftragung bzw. Durchführung der Verfügung mit Hilfe von Zugangsdaten tragenden Datenträgern, insbesondere den oben genannten Karten, führt die Bedienperson die Karte in einen Kartenleser an einem entsprechend ausgestatteten Transaktionsterminal, z.B. einen Geldautomaten, ein. Dort werden die auf dem Magnetstreifen gespeicherten Daten ausgelesen und von dem Transaktionsterminal zunächst die Eingabe der PIN abgefragt. Ist diese Eingabe korrekt erfolgt, kann die Bedienperson die an dem jeweiligen Transaktionsterminal vorzunehmenden Finanztransaktionen veranlassen und damit (im Rahmen ggf. vorgegebener Grenzen) über das Bankkonto, zu dem der Datenträger ausgestellt ist, verfügen.

Indes führt diese Form von Verfügungen zu einem immer höheren Missbrauchspotenzial in der Form, dass nicht der materiell Verfügungsberechtigte, sondern ein unberechtigter Dritter die Verfügung vornimmt. Bereits seit längerem ist bekannt, dass zum Zwecke des Missbrauchs die relevanten Daten der Datenträger, hier insbesondere die auf dem Magnetstreifen der entsprechenden Karten gespeicherten Daten, durch kriminelle Personen ausgelesen und die für die Freigabe eines Zugriffs auf das Bankkonto mittels des Datenträgers erforderliche PIN ausgespäht werden. Hierzu werden Transaktionsterminals, z.B. Geldautomaten, an denen Bedienpersonen Bargeld abheben wollen, manipuliert. So werden zusätzliche und sehr klein gebaute Lesegeräte in den Kartenleseschlitz integriert, die beim Bedienen des Transaktionsterminals durch die Bedienperson die auf dem Magnetstreifen gespeicherten Daten auslesen und speichern. Mit Hilfe z.B. kleiner Kameras werden zudem die Eingaben der PIN aufgezeichnet und somit die so zu der ausgelesenen Karte zugehörige personalisierte Identifikationsnummer ausgespäht. Bei den ausgeklügelten Systemen der Betrüger wird häufig die Funktion des Geldautomaten nicht beeinträchtigt. Die Bedienperson erhält das im Rahmen der angefragten Finanztransaktion angeforderte Bargeld und bemerkt die Ausspähung nicht. Durch Anfertigung einer Kopie der Karte, bei der auf dem Magnetstreifen die von dem Original der Karte des Benutzers ausgelesenen Daten kopiert werden, können die Betrüger nun ihrerseits, da sie zudem im Besitz der PIN zu der Karte sind, an weiteren Transaktionsterminals Finanztransaktionen zu Lasten des fremden Kontos unternehmen, insbesondere Bargeld abheben.

Zwar sind die Bankinstitute alarmiert und sperren häufig die Daten betroffener Karten für eine weitere Nutzung, wenn sich auffällige Verhaltensmuster, z.B. häufige Abhebungen bei verschiedenen Kreditinstituten an einem Tag oder an aufeinanderfolgenden Tagen ergeben. Jedoch kommt es bis zu einer solchen Sperrung in der Regel zu großen Schäden in Form von nichtautorisierten Abbuchungen von betroffenen Bankkonten.

Eine Authentifizierung in Form von PIN-Zahlen etc. kann diesem Phänomen entgegen wirken. Allerdings gibt es immer neue Umgehungslösungen, um die Authentifizierung zu umgehen oder mit gestohlenen Daten, sei es in gegenständlicher Form mit beinhalteten Informationen, wie bei Chipkarten, oder in Form von Information ohne gegenständliche Verkörperung, wie bei Passwörtern oder digitalen Schlüsseln die Authentifizierung zu erschleichen, ohne materiell die Verfügungsberechtigung zu haben.

Wünschenswert ist, dass nichtberechtigte Verfügungen so weit als möglich verhindert werden, indem die Authentifizierung fehl schlägt. Es kommt also darauf an, dass ein Zugriff oder eine Verfügung nur nach erfolgreicher Authentifizierung, die mit einem möglichst hohen Sicherheitsstandard ausgestattet sein soll, erfolgen kann.

Hersteller von Transaktionsterminals unternehmen immer weiter führende Versuche, diese Terminals "**technisch** aufzurüsten", um Manipulationen, die das oben geschilderte Muster aufweisen und auch als "Skimming" bekannt sind, zu unterbinden. Als Beispiel für derartige technische Aufrüstungen mag die Beschreibung eines Selbstbedienungsgerätes mit Manipulationserkennung dienen, wie sie in dem deutschen Patent DE 10 2004 035 224 B4 gegeben ist.

Ein weiterer Ansatz, die durch "Skimming" entstehenden Schäden zu begrenzen und Manipulationsversuchen vorzubeugen, besteht darin, durch die Transaktionsterminals die zu dem Bankkonto korrelierenden Daten nicht von dem diese Daten tragenden Magnetstreifen auszulesen, sondern von den bei modernen entsprechenden Karten ebenfalls mit integrierten Mikrochips, auf denen die entsprechenden Daten ebenfalls gespeichert sind. Diese Mikrochips sind, so der Ansatz, nicht so einfach auszulesen und zu kopieren wie die Magnetstreifen, so dass einem Missbrauch durch lediglich Magnetstreifen aufweisende, kopierte (also gefälschte) Karten auf diese Weise vorgebeugt wird. Eine diesbezügliche Umstellung bedeutet aber auch, dass die Betreiber der Transaktionsterminals erhebliche Kosten aufzuwenden haben, um die große Vielzahl der weitgehend flächendeckend in Deutschland verteilt aufgestellten Transaktionsterminals umzurüsten. Darüber hinaus sind in anderen Ländern, so z.B. und insbesondere in den USA, in denen noch eine weit größere Zahl derartiger Transaktionsterminals aufgestellt ist, entsprechende Überlegungen zu Automatenumrüstungen noch nicht so weit fortgeschritten. Dort arbeiten die Transaktionsterminals nach wie vor mit Auslesung der Daten von den Magnetstreifen. Entsprechend können Betrüger noch immer mit den von den Magnetstreifen ausgelesenen Daten und den durch Ausspähung erhaltenen PINs einen nicht legitimierten Zugriff auf ein der jeweiligen Karte bzw. dem Datenträger zugeordnetes Bankkonto von im Ausland aufgestellten Transaktionsterminals aus vornehmen. Da die entsprechenden Betrüger häufig bandenmäßig organisiert sind und da bereits der Handel mit den durch "Skimming" illegal erhaltenen Daten ein betrügerisches Geschäftsmodell darstellt (die Daten werden ins Ausland verkauft) besteht hier also nach wie vor ein hoher Anreiz für entsprechende Betrüger mit einem damit verbundenen Schadenspotenzial. Nach wie vor belaufen sich die jährlich durch entsprechende Manipulationen und Betrüge auflaufenden Schäden auf erhebliche Summen.

Ähnliche Angriffe und damit verbundene Schäden können auch in Bereichen verzeichnet werden, bei denen an den Transaktionsterminals zur Ausführung bzw. Beauftragung der Finanztransaktion die Zugangsdaten nicht mittels Datenträgern, sondern manuell von der Bedienperson einzugeben sind. Hier ist z.B. auf das weit verbreitete sogenannte "Phishing" zu verweisen, bei dem mittels fingierter EMails und gefälschter Internetseiten die Inhaber der sensiblen Daten zur Eingabe derselben aufgefordert werden, um so an diese Daten zu gelangen. Mit den so erschlichenen Daten führen die Betrüger dann ihrerseits Finanztransaktionen zu Lasten der Bankkonten der eigentlich Berechtigten durch. Ähnliche Angriffe gibt es auf Kreditkartendaten, die teilweise einzeln erschlichen, teilweise sogar in großer Menge von den die Kreditkarten verwaltenden Unternehmen oder von anderen Stellen elektronisch entwendet werden.

All diese Betrugsversuche lassen sich auch auf andere Verfügungen übertragen: So können Schlüssel kopiert, Zugangskodes mitgelesen, Fingerabdrücke imitiert oder Sprachauthentifizierungen mitgeschnitten werden.

Hier soll mit der vorliegenden Erfindung Abhilfe geschaffen werden, indem ein Verfahren zur Durchführung einer Verfügung eines Verfügungsberechtigten angegeben wird, welches eine zusätzliche Absicherung gegen einen betrügerischen Zugriff enthält.

Die Lösung dieser Aufgabe besteht in einem Verfahren mit den Merkmalen des Patentanspruchs 1 . Vorteilhafte Weiterbildungen dieses Verfahrens sind in den abhängigen Ansprüchen 2 bis 10 angegeben.

Dabei besteht die Grundidee des Verfahrens nach der Erfindung darin, nicht etwa mit technischen Hochrüstungen und erheblichem finanziellen Aufwand an bestehenden Transaktionsterminals oder Kommunikationsverbindungen das Kopieren, Auslesen oder Mitlesen der Zugangsdaten zu verhindern. Vielmehr konzentriert sich das Verfahren darauf, bei einem Finanztransaktionsvorgang eine zusätzliche Überprüfung vorzunehmen mit dem Ziel, zu erkennen, ob die anfragende Bedienperson mit dem Verfügungsberechtigten, also dem legitimen Besitzer der Zugangsdaten übereinstimmt. Dazu wird vorgeschlagen, dass bei einer durch eine Bedienperson erfolgenden Anfrage an einen Transaktionsterminal neben dem Abgleich bzw. der Verifizierung der auf dem für die Transaktionsabfrage von dem Transaktionsterminal eingelesenen Zugangsdaten auch eine Ermittlung der Position des Verfügungsberechtigten stattfindet und diese Position mit dem Aufstellort des Transaktionsterminals abgeglichen wird. Eine solche Positionsermittlung erfolgt erfindungsgemäß mit Hilfe einer über eine eindeutige Kennung verfügenden, dem Verfügungsberechtigten zugeordneten Vorrichtung. Eine solche Vorrichtung kann insbesondere ein mobiles Gerät sein.

Bei den ermittelten Positionen muss es sich nicht zwangsläufig um konkret definierte Positionen handeln, in der Regel wird es ausreichen, bestimmte räumliche Bereiche, in denen sich die dem Verfügungsberechtigten zugeordnete Vorrichtung bzw. das Transaktionsterminal befindet, zu ermitteln und auf Korrelation zu prüfen.

Das Transaktionsterminal kann dabei zahlreiche Formen annehmen. Es kann beispielsweise auch mit der dem Verfügungsberechtigten zugeordneten Vorrichtung identisch, beispielsweise ein Smartphone, sein.

Die Art der Korrelation kann unterschiedlich und vorteilhafterweise auch von der Art der Verfügung abhängig und/oder konfigurierbar sein. Insbesondere sind bevorzugt die ersten und zweiten Daten bzw. Positionsdaten auf räumliche Deckung der Art zu prüfen, dass sie eine vorgegebene räumliche Abweichung nicht überschreiten. Werden als zweite Daten bzw. zweite Positionsdaten Daten zu vergangenen Aufenthaltsorten verwendet, kann auch durch Vorgabe ggf. örtlich unterschiedlicher Maximalgeschwindigkeiten eine Prüfung auf Korrelation derart durchgeführt werden, dass die maximale räumliche Abweichung durch Multiplikation der zwischenzeitlich vergangenen Zeit und der jeweilig gültigen Maximalgeschwindigkeit ermittelt wird.

Vorteilhafterweise werden die ersten (Positions-)Daten und die zweiten (Positions-) Daten über unterschiedliche Infrastrukturen erhoben. Sie sind zwar jeweils mit Ortsinformationen verknüpft, vorteilhafterweise aber unterschiedlicher Art. Dies ist beispielsweise der Fall, wenn zum einen IP-Adressen verwendet werden und zum anderen eine Ortung über Mobilfunkzellen oder Satellitenortung durchgeführt wird. Zu bevorzugen ist, als erste (Positions-)Daten IP-Adressen und/oder fest bekannte Standorte und als zweite (Positions-)Daten Funkortungsinformationen, insbesondere aus Mobilfunkzellenortung, zu verwenden. Denkbar ist es jedoch auch, dass die Erhebung der ersten und zweiten (Positions-)Daten über dieselbe Infrastruktur durchgeführt wird.

Bevorzugt können auch für unterschiedliche Verfügungen, beispielsweise unterschiedliche Sicherheitsstufen oder Finanztransaktionsvolumina, unterschiedliche Mittel zur Erhebung der ersten und/oder insbesondere zweiten (Positions-)Daten verwendet werden. So ist beispielsweise eine Mobilfunkzellenortung in der Regel kostspieliger als die Verwendung von IP-Adressen oder GPS-Daten, so dass bei weniger kritischen Authentifizierungen beispielsweise vergleichsweise preiswerter erhältliche erste und/oder insbesondere zweite (Positions-)Daten verwendet werden können.

Bevorzugt wird insbesondere, dass die Vorrichtung bei der Abfrage der zweiten (Positions-)Daten passiv ist und/oder insbesondere keine Benutzerinteraktion erforderlich ist. Passiv bedeutet dabei nicht, dass keine von der Vorrichtung ausgesandten Informationen oder Strahlungen ausgewertet werden, sondern dass nur solche Daten/Strahlungen verwendet werden, die ohnehin konstant oder in Abständen von der Vorrichtung zur Verfügung gestellt/abgestrahlt werden. Somit ist eine passive Vorrichtung auch dadurch definiert, dass es für die Vorrichtung keinen Unterschied darstellt, ob zweite (Positions-)Daten abgefragt werden oder nicht.

Als eindeutige Kennung kommen dabei insbesondere entsprechend verschlüsselte Daten in Frage. Insbesondere wird die Kennung von der Vorrichtung nur verschlüsselt übertragen.

Die Abfrage der zweiten (Positions-)Daten kann dabei direkt über die Vorrichtung, die beispielsweise so eingerichtet ist, auf eine Anfrage hin entsprechende zweite (Positions-)Daten zur Verfügung zu stellen oder durch einen zwischengeschaltete Einrichtung, wie beispielsweise eine Datenbank, erfolgen, die entweder selbst entsprechende (Positions-)Daten von der Vorrichtung abfragt oder derartige (Positions-)Daten ohne entsprechende Anfrage von der Vorrichtung zur Verfügung gestellt bekommt.

Insbesondere, wenn von der Vorrichtung derartige (Positions-)Daten ohne entsprechende Anfrage zur Verfügung gestellt werden, aber auch dann, wenn dies nur auf Grund einer Anfrage geschieht, können die Positionsdaten entsprechend ausgewertet und auf Plausibilität geprüft werden. Entstehen hier Abweichungen, können entsprechende Maßnahmen, wie Sperrung der Zugangsdaten und/oder der Vorrichtung bzw. deren Kennung sowie vergleichbare Maßnahmen, wie in Anspruch 9 beschrieben, vorgenommen werden.

Bei der Verwendung von mobilfunkfähigen Geräten als Vorrichtung kommen als Kennung beispielsweise die IMEI-Kennung oder eine Kennung, die auf einer SIM-Karte hinterlegt ist, in Betracht. Derartige Mobilfunkgeräte, oder auf diese oder andere Weise mit einer eindeutigen Mobilfunkkennung versehene Geräte, können insbesondere ein Mobiltelefon oder ein in sonstiger Weise an das Mobilfunknetz angeschlossener (evtl. portabler) Computer sein. Durch die SIM-Karte ist eine eindeutige Kennung vergeben, die dem Besitzer dieser Karte zugeordnet ist. Die Einbeziehung von Mobiltelefonen eignet sich insbesondere deshalb, weil heutzutage die meisten Personen ein Mobiltelefon besitzen und dieses zumeist mit sich führen. Zudem können Mobiltelefone, wie auch andere mobilfunkfähige Geräte mit einer SIM-Karte bzw. einer auf andere Weise vergebenen eindeutigen Mobilfunkkennung in den Mobilfunknetzen jedenfalls mit einer recht hohen Genauigkeit der durch die Abdeckung mit dem Mobilfunknetz gebildeten Sektoren (auch Zellen genannt) geortet werden. Diese Ortung erfolgt einfach durch die Bestimmung derjenigen Funkmasten, an denen das Mobiltelefon bzw. andere mobilfunkfähige Gerät angemeldet ist. Im Umkreis eines solchen Funkmasts befindet sich das Mobiltelefon, ist also entsprechend dort zu lokalisieren.

Da häufig, wie oben aufgezeigt, die Missbrauchsversuche weit entfernt von denjenigen Orten, an denen die Daten gewonnen wurden, häufig sogar im Ausland, stattfinden, genügt eine solch grobe Ortung, um zu verifizieren, ob der Inhaber des mobilfunkfähigen Gerätes, der dieses mit sich führt, sich in einem Umkreis befindet, der sich mit dem Aufstellungsort des Transaktionsterminals deckt. Ist dies nicht der Fall, so wird nach dem erfindungsgemäßen Verfahren von einem Betrugsversuch ausgegangen und die angefragte Finanztransaktion nicht ausgeführt.

Alternativ kann eine Ortung des mobilen Gerätes auch über ein Satellitenortungssystem erfolgen, wie es derzeit mit den Systemen "GPS", "Galileo" oder ähnlichen Systemen existiert oder aufgebaut wird. Hier könnte eine entsprechende Ortung z.B. bei GPS-fähigen, eine SIM-Karte aufweisenden Mobilfunkgeräten erfolgen, aber auch bei anderen, auf andere Art und Weise individualisierten mobilen Geräten. Wichtig ist dabei nur, dass neben der Ortung auch die Individualisierung, also die individualisierte Kennung des Gerätes und/oder Benutzers mit übermittelt wird, so dass neben der Position des Gerätes auch dessen eindeutige Kennung bekannt ist.

Ebenso gut wäre es denkbar, dass anstelle der Verwendung bereits vorhandener Geräte (wie z.B. Mobiltelefone) für die erfindungsgemäße Positionsbestimmung des Berechtigten eigens von den Kreditinstituten herausgegebene mobile Geräte Verwendung finden, die z.B. über eine SIM-Karte verfügen, die dann in dem entsprechenden Mobilfunknetz eine Ortung zulässt. Gleichermaßen kann ein entsprechendes von dem Kreditinstitut herausgegebenes mobiles Gerät auch über die Möglichkeit z. B. einer GPS-Ortung verfügen, wie oben beschrieben.

Auch Computer können als dem Berechtigten eindeutig zugeordnete Geräte verwendet werden und zwar sowohl als mobile Geräte (in Form von tragbaren Geräten, wie Notebooks, Laptops und dergleichen) als auch als feststehende Geräte, wie Tischrechner oder ähnliches. Die eindeutige Zuordnung kann dabei insbesondere über die bei modernen Computern eindeutig vergebenen Prozessor-IDs erfolgen. Aber auch andere Kennungen, wie beispielsweise Signaturen oder ähnliches sind denkbar. Eine Ortung eines solchen Computers kann erfolgen, indem z. B. auf einen GPS-Empfänger zugegriffen wird, wenn ein solcher in dem Computer integriert ist. Alternativ kann eine Ortung dann (jedenfalls mit ausreichender Genauigkeit) vorgenommen werden, wenn der Computer mit dem Internet verbunden ist. In einem gewissen Rahmen ist über die vergebene IP-Adresse der Standort des Gerätes ermittelbar. Sofern der Internetzugang über eine auf Mobilfunktechnik basierende Verbindung geschieht, steht wiederum die oben bereits erläuterte Ortung im Mobilfunknetz zur Verfügung.

Zu diesen Zwecken kann beispielsweise eine Software auf dem Computer laufen, installiert sein und/oder ausgeführt werden, die auf eine entsprechende Anfrage entsprechende zweite (Positions-)Daten ermittelt und zusammen mit der insbesondere verschlüsselten Kennung, insbesondere verschlüsselt, übermittelt. Dabei kann in der Software eine entsprechende Kennung hinterlegt sein, insbesondere in verschlüsselter Form, oder die Software kann die Kennung, beispielsweise aus der Prozessor-ID, ermitteln.

Andererseits kann ein Computer, insbesondere ein Personalcomputer, als Transaktionsterminal dienen, z.B. für einen Zahlungsvorgang per Kreditkarte im Internet oder aber für die Durchführung von Finanztransaktionen per Online-Banking. Dann wird eine für den Computer, insbesondere über die IP-Adresse wie z.B. oben beschrieben, zu ermittelnde Position als Aufstellungsort des Transaktionsterminals gewertet und dieser Aufstellungsort mit einer Position eines anderen ortbaren Gerätes, das dem Verfügungsberechtigten zugeordnet ist, im Rahmen des erfindungsgemäßen Verfahrens abgeglichen. Denkbar ist es auch, dass das Transaktionsterminal identisch mit dem anderen Gerät ist.

Dabei muss die IP-Adresse nicht separat übermittelt werden, es reicht vielmehr aus, wenn die sonstigen Daten, wie Verfügungsanfrage und/oder Zugangsdaten verbunden mit der IP-Adresse übermittelt werden.

Das erfindungsgemäße Verfahren beinhaltet auch, dass, insbesondere im Falle der Unmöglichkeit einer Positionsbestimmung bzw. Ortung des ortbaren Gerätes zum Zeitpunkt der Anfrage der Verfügung, auf in der Zeit zurückliegende Positionsdaten zurückgegriffen wird, diese Daten dann im Rahmen einer Plausibilitätskontrolle mit dem Ort des Transaktionsterminals abgeglichen werden und eine Entscheidung getroffen wird, ob es sich, unter der Vorraussetzung, das der Verfügungsberechtigte die ihm zugeordnete Vorrichtung mitführt, anhand dieser zurückliegenden Positionsdaten bei der Bedienperson um den Verfügungsberechtigten handeln kann oder nicht. Dabei sind die wesentlichen, die Entscheidungsfindung berührenden Aspekte die räumliche Entfernung zwischen der zuletzt festgestellten Position des dann insbesondere als mobil anzunehmenden ortbaren Gerätes des Verfügungsberechtigten zu dem Aufstellungsort des Transaktionsterminals, an dem die Finanztransaktion angefragt wird, sowie die seit der letzten Positionsbestimmung des ortbaren Gerätes verstrichene Zeit. Für beide Kriterien werden im Rahmen eines erfindungsgemäßen Verfahrens zulässige Grenzen gesetzt. Z.B. ist es möglich, die seit der zuletzt erfolgten Positionsbestimmung des ortbaren Gerätes verstrichene Zeit etwa auf eine Stunde, drei Stunden oder sechs Stunden festzulegen, die maximal zulässige Diskrepanz zwischen der zuletzt festgestellten Position des ortbaren Gerätes und dem Aufstellungsort des Transaktionsterminals auf z. B. 10 km, 30 km oder 50 km zu beschränken. Auch wird hier eine Abwägung zwischen verstrichener Zeit und Entfernung vorzunehmen sein, so dass nur solche Entfernungssprünge als zulässig erachtet werden, die sinnvoller Weise in der verstrichenen Zeit seit der letzten Ortung erfolgen konnten.

Für die Umsetzung des erfindungsgemäßen Verfahrens ist dabei lediglich erforderlich, dass Authentifizierungseinrichtungen bzw. dahinter stehende Steuerungssysteme einen Zugriff auf die aktuellen bzw. die über einen gewissen Zeitraum gespeicherten Positionsdaten der Vorrichtungen erhalten, um diese bei einer angefragten Verfügung abrufen und in der oben geschilderten Weise mit dem Ort des Transaktionsterminals abgleichen zu können.

In einer alternativen Ausgestaltung können die zweiten (Positions-)Daten auch durch eine Eingabe des Berechtigten in einen entsprechenden Speicher, beispielsweise in einem entsprechendem System, beispielsweise eine entsprechend, insbesondere mit anderen Zugangsmitteln und/oder Vorrichtungen gesicherte Onlineplattform, bereit gestellt und aus diesem abgefragt werden. Der Speicher kann dabei Bestandteil der Authentifizierungseinrichtung sein oder lediglich mit dieser verbunden sein.

Dabei sollte der Speicher ausreichend vor Zugriff durch andere Personen gesichert sein. Dazu bietet der Stand der Technik umfangreiche Optionen. Vorteilhafterweise wird der Zugang mit anderen Mitteln oder zumindest anderen Zugangsdaten gesichert als die, die für die Verfügungsanfrage verwendet werden.

Ein solcher Speicher kann beispielsweise als Datenbank realisiert werden. In dem Speicher kann es dem Verfügungsberechtigten möglich sein, für bestimmte Zeiten oder generell Gegenden oder Positionen bzw. entsprechende mit solchen verküpfte Daten, wie beispielsweise IP-Adressen oder IP-Adressenblöcke oder bestimmte Zellen eines Funknetzes anzugeben bzw. frei zu schalten. Diese bilden dann die zweiten (Positions-)Daten des Speichers. Wird eine solche Ausgestaltung mit Einbeziehung eines Speichers gewählt, kann die Plausibilitätskontrolle, also die Prüfung der Korrelation, der ersten (Positions-)Daten zusätzlich, alternativ und/oder ausschließlich gegen die in dem Speicher für die jeweilige Zeit der Verfügungsanfrage hinterlegten zweiten (Positions-)Daten erfolgen.

Ein derart eingerichtetes Verfahren kann die Durchführung erleichtern und eine dem Verfügungsberechtigten zugeordnete Vorrichtung entbehrbar machen..

Auch denkbar ist eine Kombination der Verwendung von zweiten (Positions-)Daten eines Speichers und einer Vorrichtung. Hier sind verschiedene Kombinationen denkbar. So können beispielsweise die zweiten (Positions-)Daten der Vorrichtung und des Speichers auch derart gemeinsame verwendet werden, das Plausibilitäten sowohl zwischen ersten (Positions-)Daten und zweiten (Positions-)Daten der Vorrichtung als auch zwischen ersten (Positions-)Daten und zweiten (Positions-)Daten des Speichers durchgeführt werden und eine Freigabe nur dann erfolgt, wenn beide Plausibilitätskontrollen positiv ausfallen. Alternativ kann eine Freigabe auch erfolgen, wenn nur eine Plausibilitätskontrolle positiv ausfällt. Auch ist es denkbar, dass die Plausibilitätsgrenze einer Kontrolle erhöht bzw. verändert wird, wenn die andere positiv ausfällt. Denkbar ist auch ein Rückgriff auf zweite (Positions-)Daten des Speichers nur dann, wenn keine ausreichend jungen oder keine aktuellen zweiten (Positions-)Daten der Vorrichtung zur Verfügung stehen.

Allerdings kann je nach Anwendungsfall ein Verfahren mit oder ausschließlich mit Plausibilitätskontrolle gegen zweite Daten korrelierend zu einer räumlich begrenzten Gegend eines Aufenthaltes einer über eine eindeutige Kennung verfügenden, dem Verfügungsberechtigten zugeordneten Vorrichtung und/oder gegen zweite Positionsdaten eines Aufenthaltes einer über eine eindeutige Kennung verfügenden, dem Verfügungsberechtigten zugeordneten Vorrichtung für jede Verfügungsanfrage zu bevorzugen sein. Dabei kann es sich auch um gespeicherte Daten aus der Vergangenheit handeln.

Sofern es sich bei den Vorrichtungen um solche handelt, die von den Betreibern der Authentifizierungseinrichtung selbst herausgegeben und verwaltet werden, ist es möglich, dass entsprechende Dienstleister die Daten selbst erfassen und verwalten. Insoweit auf Daten für Mobiltelefone oder andere bei den Mobilnetzbetreibern registrierte mobilfunkfähige Geräte oder aber Daten über die Zuordnung von IP-Adressen zu bestimmten Transaktionsterminals und/oder Vorrichtungen und deren Lokalisierung zurückgegriffen wird, sind mit den jeweiligen Betreibern entsprechende Vereinbarungen über einen Datenaustausch zu treffen.

Insbesondere da viele Benutzer von Transaktionsterminals über Mobiltelefone und vergleichbare an Mobilfunknetze angeschlossene Mobilfunkgeräte verfügen, kann das erfindungsgemäße Verfahren sehr einfach und mit geringem Aufwand installiert werden. Hierbei ist allein der Zugriff auf die entsprechenden ersten und zweiten (Positions-)Daten zu erlangen, und es müssen entsprechende Änderungen im Ablauf der bestehenden Authentifizierungen, also in deren Steuerung vorgenommen werden, was in der Regel lediglich eine softwaremäßige Umstellung bedeutet, die gegenüber einer Änderung der Hardware deutlich kostengünstiger ist.

Neben diesem Vorteil ergibt sich ein weiterer, schnell erkennbarer Vorteil des erfindungsgemäßen Verfahrens gegenüber denjenigen Ansätzen, die ein "Skimming" oder "Phishing" durch Erhöhung der Sicherheitsanforderungen allein durch verschärfte einsystemige, etwa auf die Fälschungssicherheit von Maestro-/EC-Karten gerichtete Maßnahmen zu verhindern suchen daraus, dass mit diesem Verfahren nicht lediglich der Missbrauch von nach "Skimming" oder "Phishing" angefertigten Kopien, sondern auch die Zugangsdaten, die zwar echt sind, die aber dem Verfügungsberechtigten entwendet worden sind, nicht mehr für Verfügungen außerhalb seines Aufenthaltsbereiches eingesetzt werden können. Entsprechende Missbräuche kommen nicht selten z.B. nach dem Diebstahl eines Portemonnaies vor, insbesondere dann, wenn weniger sicherheitsbewusste Nutzer nicht nur die entsprechenden Datenträger (Bankkarten) im Portemonnaie mit sich führen, sondern dort auch die zugehörige Zugangsdaten, z.B. PIN, notiert haben.

Im Rahmen des Verfahrens können auch, wenn eine fehlende Korrelation zwischen den ersten und zweiten (Positions-)Daten festgestellt wird, die Zugangsdaten für weitere Verwendungen gesperrt und/oder Zugangsmittel, wie Karten, in dem Transaktionsterminal einbehalten werden. Es kann auch ein Alarm ausgelöst werden, der z.B. bei den örtlichen Sicherheitsbehörden aufläuft, und es können die Daten über die angefragten Verfügungen gespeichert und für eine Übergabe an eine Ermittlungsstelle bereitgehalten werden. Zu solchen Daten gehören insbesondere auch photographische Aufnahmen derjenigen Personen, die die Verfügung angefragt haben. Derartige Aufnahmen können später helfen, die Betrüger zu ermitteln.

Ein Beispiel derartiger Verfahren kann beispielsweise der Zugang zu einem Gebäude, Gelände, Haus oder Raum mit einem Code oder einem digitalen Schlüssel, z. B. einer Schlüsselkarte sein. Dann kann das Verfahren so implementiert werden, dass der Zugang nur gewährt wird, die Tür, Schleuse, Schranke oder ähnliches sich also nur öffnen lässt, wenn die dem Benutzer zugeordnete Vorrichtung, beispielsweise ein Mobiltelefon, sich in einem vorbestimmten Umkreis aufhält bzw. in einer bestimmten Zeitspanne aufgehalten hat.

Dieses Verfahren ähnelt zwar auf den ersten Blick derartigen Zugangskontrollen, bei denen ein Zugangsmittel physisch beim Benutzer vorhanden sein muss (wie beispielsweise eine RFID-Karte), doch bietet es durch die doppelte Überprüfung, einmal der bereitgestellten Zugangsdaten und zum anderen über die Abfrage der zweiten (Positions-)Daten erhöhte Sicherheit, weil dieser zweite Schritt der Überprüfung vom ersten getrennt ist. Zwar wird auch eine RFID-Karte insofern lokalisiert, als ihre Anwesenheit zur Bereitstellung der darauf gespeicherten Zugangsdaten notwendig ist, doch erfolgt keine Überprüfung durch eine Plausibilitätskontrolle an Hand zweiter (Positions-)Daten.

Ein anderes Beispiel ist die Bezahlung mit einer Maestro-/EC- oder Kreditkarte. Bei dem Auslesen der Kreditkarte und dem Übermitteln der Daten wird gleichzeitig die IP-Adresse des Lesegerätes oder sogar eine bekannte Standortinformation mit übertragen. Die Zahlung wird dann jedoch nur freigegeben, wenn sich die Vorrichtung in einem definierten Umkreis aufhält bzw. aufgehalten hat. So kann bei der Verwendung eines Mobiltelefons die Bezahlung nur erfolgen, wenn das Mobiltelefon entsprechend in der Nähe lokalisiert wird/wurde. Wird beispielsweise die Maestro-/EC- oder Kreditkarte gestohlen, ist die Bezahlung nur in der Nähe des eigentlichen Besitzers bzw. dessen Vorrichtung, beispielsweise Mobiltelefons, möglich. Ein Missbrauch zahlreicher Karten oder Kartendaten wird dadurch ausgeschlossen. Insbesondere wird die Verwendung großer Mengen gekaufter/gestohlener Kreditkartendaten verhindert.

Ähnliches lässt sich beim Online-Banking oder an Banking-Terminals realisieren.

Ein weiteres Beispiel ist der Zugriff auf einen digitalen Dienst, eine digitale Information, ein Gerät oder ein Netz. Hier kann der Zugang ebenfalls nur dann gewährt werden, wenn sich die entsprechende Vorrichtung in der Nähe des Transaktionsterminals, hier in der Regel insbesondere des für die Anfrage verwendeten Computers befindet/befand.

Derartige Sicherheitsmechanismen werden immer wichtiger, da zunehmend Dienste, wie beispielsweise Anwendungen oder Rechenleistung und Informationen und Daten von einer lokalen Vorhaltung hin ins Netz verlagert werden oder von entfernter Stelle aus zugänglich gemacht werden.

Dadurch lassen sich auch Verschleierungsmaßnahmen, wie das Routen der Anfrage über mehrere (gekaperte) Computer unterbinden, denn hier müsste sich die Vorrichtung in der Nähe des zuletzt die Anfrage weiter gebenden Computers befinden.

Eine weitere Veranschaulichung soll im Weiteren an Hand einer Verfahrensablaufskizze erfolgen, die die Unterschiede der Verfügungsanfragen des Berechtigten und einer anderen Person noch einmal herausstellt. Die Skizze sowie die entsprechende Beschreibung des Ablaufes sind rein exemplarisch und nicht beschränkend.

In dem hier gezeigten Beispiel gliedert sich die Authentifizierungseinrichtung in zwei Elemente, einmal die Steuerungseinrichtung und einmal die Authentifizierungseinrichtung im engeren Sinne. Eine Untergliederung in mehrere Komponenten ist prinzipiell immer möglich. Die Komponenten können örtlich voneinander entfernt, jedoch mit einander verbunden sein. So kann als Steuerungseinrichtung beispielsweise eine nur geringfügig modifizierte nicht erfindungsgemäße Authentifizierungseinrichtung, wie beispielsweise ein Bankserver, zur Entgegennahme von und Entscheidung über Verfügungsanfragen, insbesondere Finanztransaktionsanfragen, verwendet werden. Die Steuerungseinrichtung, die Teil der erfindungsgemäßen Authentifizierungseinrichtung ist, regelt den Verfahrensablauf und genehmigt die Verfügung oder lehnt sie ab. Dabei basiert die Entscheidung über die Genehmigung oder Ablehnung der Verfügung zumindest teilweise auf den von der Authentifizierungseinrichtung im engeren Sinne erhaltenen Daten.

Der Verfügungsberechtigte bzw. die andere Person startet eine Verfügungsanfrage. Dabei werden eine Kennung sowie Zugangsdaten und ein Ort bzw. erste (Positions-)Daten an die Steuerungseinrichtung übermittelt. Dazu bedient sich der Verfügungsberechtigte bzw. die andere Person eines Transaktionsterminals, beispielsweise eines Bankautomats, eines Kredit- oder EC-Kartenlesegeräts, eines Mobiltelefons, Computers, Laptops, Browsers und/oder Zugangsprüfmoduls. Die ersten (Positions-)Daten können dabei beispielsweise auf Zelleninformationen, IP-Adressen und/oder GPS oder anderen genannten Daten basieren.

Die Steuerungseinrichtung übermittelt daraufhin die Kennung und den Ort bzw. die ersten (Positions-)Daten an die Authentifizierungseinrichtung im engeren Sinne. Diese prüft die Plausibilität und übermittelt diese oder übermittelt zweite (Positions-)Daten an die Steuerungseinrichtung. Die Zugangsdaten können durch die Steuerungseinrichtung überprüft werden. Alternativ und/oder zusätzlich können die Zugangsdaten und die Kennung auch an ein anderes System, insbesondere die Authentifizierungseinrichtung im engeren Sinne übermittelt und überprüft werden. Zur Überprüfung kann die Steuerungseinrichtung auch lediglich die Kennung übertragen und daraufhin die korrelierenden Zugangsdaten zur Durchführung eines Vergleichs erhalten.

Die Steuerungseinrichtung gibt dann bei entsprechend positiv ausgefallener Prüfung der ersten und zweiten (Positions-)Daten wie Zugangsdaten die Verfügungsanfrage frei bzw. lehnt diese ab. Fällt die Plausibilitätskontrolle der ersten und zweiten (Positions-)Daten negativ aus, wird die Verfügungsanfrage abgelehnt.

Die Authentifizierungseinrichtung im engeren Sinns kann dabei beispielsweise durch einen Mobilfunk- und/oder Internetprovider oder einen Dienstleister gestellt und/oder unter Rückgriff auf Daten eines solchen ausgebildet sein.

Dabei kann eine Vorratsdatenspeicherung der vergangenen (Positions-)Daten, insbesondere zusammen mit entsprechenden Zeitinformationen, der dem Verfügungsberechtigten zugeordneten Vorrichtung erfolgen bzw. auf eine solche Rückgriff genommen werden. Alternativ und/oder zusätzlich kann die Vorrichtung beim Vorliegen einer Anfrage lokalisiert werden. Als Vorrichtung kommen insbesondere ein Mobiltelefon oder ein Computer in Frage. Die Lokalisierung kann dabei, wie auch bei der Erhebung der Vorratsdatenspeicherung, beispielsweise auf Basis von Zelleninformationen, IP-Adressen, Eingaben in ein entsprechendes System und/oder GPS-Signalen erfolgen.

Je nachdem, ob die Plausibilitätskontrolle in der Steuerungseinrichtung oder der Authentifizierungseinrichtung im engeren Sinne erfolgt, werden von der Authentifizierungsvorrichtung insbesondere die zweiten (Positions-)Daten und/oder darauf basierende Daten und/oder das Ergebnis der Plausibilitätskontrolle, an die Steuerungseinrichtung übertragen.

Wird die Verfügungsanfrage von einer anderen Person gestartet, schlägt die Plausibilitätskontrolle fehl, wenn die andere Person sich nicht in der Nähe der Vorrichtung aufhält, während sie die Anfrage startet. Somit wird in diesem Fall die Anfrage abgelehnt. Kommt die Anfrage von dem Verfügungsberechtigten und befindet er sich in der Näher der Ihm zugeordneten Vorrichtung und sind die Zugangsdaten korrekt, kann die Freigabe der Verfügung erfolgen.

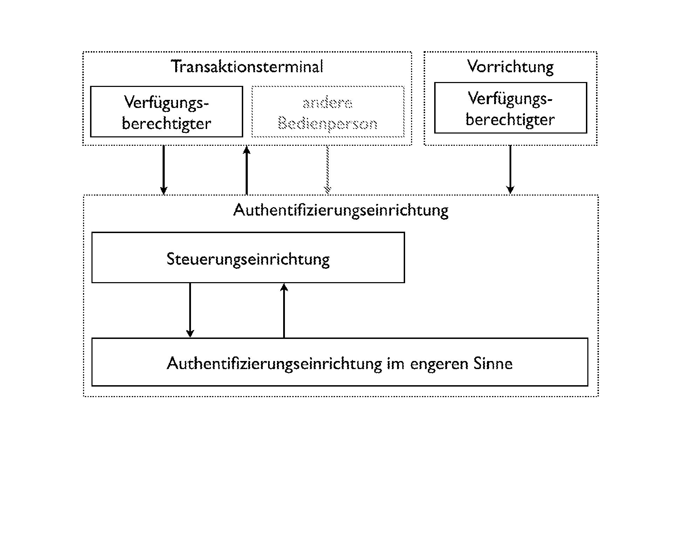

## Patentansprüche

1. Verfahren zur Durchführung einer Verfügung betreffend ein Verfügungsobjekt eines Verfügungsberechtigten an einem Transaktionsterminal, wobei von einer Bedienperson zu dem Verfügungsobjekt korrelierende Zugangsdaten in das Transaktionsterminal eingegeben und an eine Authentifizierungseinrichtung übertragen werden, **dadurch gekennzeichnet, dass** von dem Transaktionsterminal zu dem erste Daten korrelierend zu einer räumlich begrenzten Gegend und/oder erste Positionsdaten zu der aktuellen Position in der bzw. an der sich das Transaktionsterminal befindet, an die Authentifizierungseinrichtung übertragen werden, wobei von der Authentifizierungseinrichtung zweite Daten korrelierend zu einer räumlich begrenzten Gegend und/oder zweite Positionsdaten eines Aufenthaltes einer über eine eindeutige Kennung verfügenden, dem Verfügungsberechtigten zugeordneten Vorrichtung und/oder zweite Daten korrelierend zu einer räumlich begrenzten Gegend und/oder zweite Positionsdaten aus einem dem Verfügungsberechtigten zugeordneten und von diesem aktualisierbaren Speicher abgefragt werden und dass die von der Bedienperson angefragte Verfügung nur dann freigegeben wird, wenn zusätzlich zu einer erfolgreichen Verifikation der von der Bedienperson eingegebenen Zugangsdaten die ersten Daten und/oder ersten Positionsdaten mit den zweiten Daten und/oder zweiten Positionsdaten in vorbestimmter Weise korrelieren.

2. Verfahren nach Anspruch 1, **dadurch gekennzeichnet, dass** es sich bei der dem Verfügungsberechtigten zugeordneten Vorrichtung um ein ortbares, insbesondere drahtlos ortbares, insbesondere mobiles Gerät handelt.

3. Verfahren nach einem der vorstehenden Ansprüche, **dadurch gekennzeichnet, dass** es sich bei den zweiten Daten und/oder zweiten Positionsdaten um Daten bzgl. der aktuellen Position und/oder bzgl. mindestens einer vergangenen Position, insbesondere kombiniert mit den entsprechenden Aufenthaltszeiten der dem Verfügungsberechtigten zugeordneten Vorrichtung handelt.

4. Verfahren nach einem der vorstehenden Ansprüche, **dadurch gekennzeichnet, dass** die Abfrage der zweiten Daten und/oder zweiten Positionsdaten zumindest auch in einer Datenbank erfolgt, die insbesondere mit der Authentifizierungseinrichtung verbunden oder Teil dieser ist, und die aktuelle und/oder vergangene Positionsdaten und/oder Daten korrelierend zu einer räumlich begrenzten Gegend des Aufenthalts der dem Verfügungsberechtigten zugeordneten Vorrichtung, insbesondere kombiniert mit Aufenthaltszeiten, vorhält.

5. Verfahren nach einem der vorstehenden Ansprüche, **dadurch gekennzeichnet, dass** als dem Verfügungsberechtigten zugeordnete Vorrichtung ein mobilfunkfähiges Gerät, insbesondere ein Mobiltelefon, mit einer eindeutigen Mobilfunkkennung, verwendet wird.

6. Verfahren nach einem der vorstehenden Ansprüche, **dadurch gekennzeichnet, dass** die zweiten Daten und/oder zweiten Positionsdaten und/oder die ersten Daten und/oder ersten Positionsdaten durch eine Ortung in einem Mobilfunknetz erfasst werden und/oder durch eine in oder an dem Transaktionsterminal bzw. der dem Verfügungsberechtigten zugeordneten Vorrichtung beinhaltete Satellitenortungsvorrichtung erfasst werden.

7. Verfahren nach einem der vorstehenden Ansprüche, **dadurch gekennzeichnet, dass** die zweiten Daten und/oder zweiten Positionsdaten und/oder die ersten Daten und/oder ersten Positionsdaten mindestens eine abhängig vom Aufenthaltsort vergebene Kennung, insbesondere einer Internetprotokoll-Adresse (IP-Adresse) sind.

8. Verfahren nach einem der vorhergehenden Ansprüche, **dadurch gekennzeichnet, dass** die Zugangsdaten auf einem von der Bedienperson bereitgestellten Datenträger gespeichert sind und von dieser durch Einbringen des Datenträgers in eine Datenleseeinheit des Transaktionsterminals in das Transaktionsterminal eingegeben werden.

9. Verfahren nach einem der vorhergehenden Ansprüche, **dadurch gekennzeichnet, dass** bei fehlender Korrelation der ersten Daten und/oder ersten Positionsdaten mit den zweiten Daten und/oder zweiten Positionsdaten die Zugangsdaten und/oder die Vorrichtung und/oder deren Kennung für weitere Verwendungen gesperrt und/oder ein die Zugangsdaten tragender Datenträger von dem Transaktionsterminal einbehalten und/oder ein Alarm ausgelöst und/oder Daten über die angefragte Transaktion gespeichert und für eine Übergabe an eine Ermittlungsstelle bereitgehalten werden wird.

10. Verfahren nach einem der vorhergehenden Ansprüche, **dadurch gekennzeichnet, dass** es sich bei der Verfügung um eine Finanztransaktionen, insbesondere in Form des Onlinebankings, mit Hilfe einer Maestro-/EC- und oder Kreditkarte und/oder eines ortsfesten Bankingterminals, um einen Zugang zu Räumen, Gebäuden und/oder Geländen, Zugang zu digitalen Informationen, Netzen und/oder Diensten, wie beispielsweise Dateien, beispielsweise in Clouds, Dropboxen, (File-/Web-)Servern oder wie beispielsweise Konten, E-Mail-Konten, Webseiten oder Zugänge zu Computern an sich oder Remote-, insbesondere VPN-Zugang handelt.
